# EUROPEAN PATENT SPECIFICATION

(11) **EP 4 179 739 B1**
(45) Date of publication and mention of the grant of the patent: **01.10.2025**
(21) Application number: 20948133.2
(22) Date of filing: 07.08.2020
(51) Int. Cl.: H04W 68/00, H04W 74/00, H04W 74/0833, H04W 76/30

(54) **WIRELESS MULTI-CARRIER CONFIGURATION AND SELECTION**
DRAHTLOSE MEHRTRÄGERKONFIGURATION UND AUSWAHL
CONFIGURATION ET SÉLECTION DE PORTEUSES MULTIPLES SANS FIL

(43) Date of publication of application: 17.05.2023
(73) Proprietor: ZTE Corporation, Shenzhen, Guangdong 518057 (CN)
(72) Inventor: LU, Ting, Shenzhen, Guangdong 518057 (CN); DAI, Bo, Shenzhen, Guangdong 518057 (CN); SHA, Xiubin, Shenzhen, Guangdong 518057 (CN)
(74) Representative: Vossius & Partner Patentanwälte Rechtsanwälte mbB
(86) International application number: PCT/CN2020/107993
(87) International publication number: WO 2022/027675

(56) References cited:
- CN-A- 104 811 995
- CN-A- 107 211 392
- CN-A- 108 307 323
- US-A1- 2016 044 633
- US-A1- 2017 064 670
- US-A1- 2019 028 905
- US-A1- 2019 223 212
- US-A1- 2019 342 852
- US-A1- 2020 015 279
- QUALCOMM INCORPORATED: "Remaining solution options for MT-initiated DL EDT", vol. RAN WG2, no. Reno, Nevada, USA; 20190513 - 20190517, 13 May 2019 (2019-05-13), XP051729909, Retrieved from the Internet <URL:http://www.3gpp.org/ftp/Meetings%5F3GPP%5FSYNC/RAN2/Docs/R2%2D1906444%2Ezip> [retrieved on 20190513]
- ZTE: "Consideration on coverage enhancement level issues for NB-IoT", 3GPP TSG-RAN WG2 MEETING #92 R2-156270, 20 November 2015 (2015-11-20), XP051024493
- HUAWEI: "Report of the email discussion [91bis#48][NB-IOT] Coverage level", 3GPP TSG-RAN WG2 MEETING #92 R2-156755, 20 November 2015 (2015-11-20), XP051024981

## Description

### TECHNICAL FIELD

This patent document is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed. US 2020/015279 A1 is related prior art.

### SUMMARY

The invention is specified by the independent claims. Preferred embodiments are defined in the dependent claims. The aspects and examples listed in the following are presented for illustrative purposes only, to support a better understanding of the invention. In the following description, although numerous features may be designated as optional, it is nevertheless acknowledged that all features comprised in the independent claims are not to be read as optional. This patent document describes, among other things, techniques, and apparatuses for providing multi-carrier configuration, selection, and continuity of service for broadcast and multicast services.

In one aspect, a method of wireless communication is disclosed. The method includes transmitting, from the wireless node to the network node, a report including information identifying one or more enhanced coverage levels or number of physical random-access channel (PRACH) repetitions associated with the wireless node.

In another aspect, a method of wireless communication is disclosed. The method includes receiving, by a network node from a wireless node, a report including information identifying one or more enhanced coverage levels or number of PRACH repetitions associated with the wireless node; and performing a paging operation for the wireless node based on the report.

In another aspect, a method of wireless communication is disclosed. The method includes receiving, by a wireless node from a network node, a paging message that includes one or more transmission resources on which a paging response to the paging message is to be sent;
and transmitting, by the wireless node, the paging response using the one or more transmission resources.

In another aspect, a method of wireless communication is disclosed. The method includes transmitting, by a network node to a wireless node, a message instructing the wireless node to enable or disable monitoring paging or initiating random access on resources configured for corresponding enhanced coverage levels or configured for corresponding services.

In another aspect, a method of wireless communication is disclosed. The method includes receiving, by a wireless node from a network node, a message instructing the wireless node to enable or disable monitoring paging or initiating random access on the resources configured for certain enhanced coverage levels or configured for certain services; and performing an enabling or disabling of monitoring paging or initiating random access on the resources configured for corresponding enhanced coverage levels or configured for corresponding services.

In another aspect, a method of wireless communication is disclosed. The method includes communicating, by a network node serving multiple wireless nodes, a random-access configuration in which different transmission resources are allocated for different enhanced coverage levels, the random-access configuration further identifying reception resources for receiving a random-access response transmission to be performed by the multiple wireless nodes.

In another aspect, a method of wireless communication is disclosed. The method includes receiving, by a wireless node, a random-access configuration in which different transmission resources are allocated for different enhanced coverage levels, the random-access configuration further identifying reception resources for receiving a random access response transmission to be performed by the multiple wireless nodes.

In another aspect, a method of wireless communication is disclosed. The method includes communicating, by a network node serving multiple wireless nodes, a resource configuration in which different transmission resources are allocated for different services, wherein the different services include at least one of: a mobility/stationary characteristic, a different paging probability ranges, an enhanced coverage restricted UE, a different access category, or a different access class,

In another aspect, a method of wireless communication is disclosed. The method includes receiving, by a wireless node, a resource configuration in which different transmission resources are allocated for different services, wherein the different services include at least one of: a mobility/stationary characteristic, a different paging probability ranges, an enhanced coverage restricted UE, a different access category, or a different access class.

These, and other, aspects are described in the present document.

### BRIEF DESCRIPTION OF DRAWINGS

FIG. 1 shows an example of enhanced coverage level (CEL) information exchange between a wireless node, base station, and core network.
FIG. 2A shows an example of a coverage level based paging scheme.
FIG. 2B shows an example of enabling a coverage level based paging scheme using attach request/tracking area update (TAU) request messages.
FIG. 3 shows an example of enabling a coverage level based paging scheme using a radio resource control (RRC) establishment procedure.
FIG. 4 shows an example of enabling coverage level based paging scheme using a non-access stratum (NAS) procedure.
FIGS. 5A and 5B show examples of a coverage level based paging scheme including detach request/detach accept messages.
FIG. 6 shows an example of disabling a coverage level.
FIGS. 7A and 7B show examples of disabling a coverage level based paging scheme including an RRC establishment procedure.
FIG. 8 shows an example of falling back to a legacy paging mechanism from a coverage level based paging scheme.
FIGS. 9A and 9B show examples of falling back to a legacy paging scheme from a coverage level based paging scheme using an RRC establishment procedure.
FIG. 10 shows an example of negotiating a timer of a coverage level based paging scheme with a mobility management entity (MME).
FIG. 11 shows an example of negotiating a timer of a coverage level based paging scheme with eNB.
FIG. 12 shows an example of a process for wireless communication.
FIG. 13 shows another example of a process for wireless communication.
FIG. 14 shows an embodiment of the invention.
FIG. 15 shows a wireless communication system.
FIG. 16 shows a block diagram of a portion of a radio system.

### DETAILED DESCRIPTION

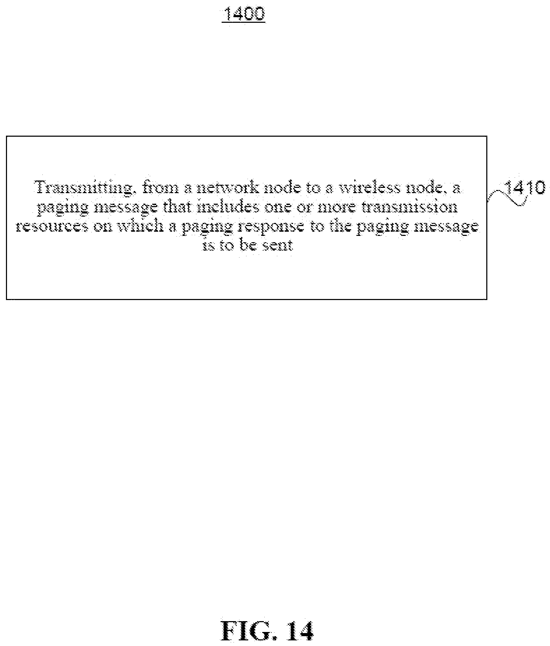

In the following, figure 14 and the related description paragraphs present an embodiment of the invention. The other examples or embodiments are presented for illustrative purposes only, to support a better understanding of the invention.

Certain features are described using the example of Fifth Generation (5G) wireless protocol. However, applicability of the disclosed techniques is not limited to only 5G wireless systems.

5G systems (5GS) include multicast/broadcast services. An aspect of these services is multi-cast discovery and the starting and ending of multicast services. User equipment (UEs) may simultaneously operate using unicast (also referred to as unicast) and multicast services. When a UE moves from one radio access network (RAN) node to another RAN node, service continuity of the broadcast and multicast services is needed. Disclosed herein are techniques for providing efficient multi carrier configuration and selection and continuity of service for broadcast and multicast services.

In a paging mechanism where paging messages are transmitted for the set number of repetitions, paging carriers are configured without considering a coverage level of a particular user device. If the paging carriers are configured corresponding to the coverage level of each user device, the eN-B would send paging message for a set number of repetitions according to the coverage level of each user device in the selected paging carrier, which would avoid unnecessary consumption of paging resources that would have been caused by transmitting paging messages for the maximum number of repetitions in each paging carrier.

In an example paging mechanism that uses the same paging carrier regardless of the UE's coverage level, parameters that are related to a paging mechanism are cell specific. For example, the paging related parameters such as discontinuous reception (DRX) and a number of paging repetitions (npdcch-NumRepetitionPaging) are configured for each cell.

After selecting a paging carrier based on the formula for paging carrier selection, the eNB sends paging messages for the maximum number of repetitions in each paging carrier. The UE receives paging messages until the maximum number of repetitions is reached.

The coverage level varies depending on the quality of radio environment. In a good radio environment, the UE usually needs less paging repetitions than the configured paging related parameters such as the value of the npdcch-NumRepetitionPaging. Therefore, the repetition of paging transmission by the eNB according to the set value would result in a waste of paging resources.

The methods and systems implemented based on some embodiments of the disclosed technology can avoid unnecessary waste of paging resources by paging the UE for a number of repetitions according to its coverage level and provide efficient multi carrier configuration and selection scheme.

In current systems, some of the existing multi-carrier paging/PRACH related parameters are cell-specific parameters. This would lead all NB-IoT carriers within one cell having the same configuration (e.g. paging etc.) and also results in mixed services running on one carrier with the same configuration. System efficiency may suffer if the service requirements are diverse. In fact, there are a lot of IoT services running in the network. Different services have different requirements in terms of coverage, latency tolerance, battery life, etc. Therefore, some multi-carrier related procedures may be changed from being cell-specific to NB-IoT carrier-specific. With this, operators can handle different services with different requirements on different NB-IoT carrier in a more efficient way.

Specially, it already supports that different UL NB-IoT carriers for random access can have different PRACH parameters, also these carriers can be configured for different enhanced coverage levels (CELs). According to the configuration, the UE in some CELs can select certain carriers for random access. The different configuration for different carriers can also help to fulfill different service requirements.

However, current techniques do not support different DL NB-IoT carriers for paging with different paging-related parameters and do not support different DL NB-IoT carriers for different CELs. Moreover, current techniques do not support different services being assigned to different carriers.

### Downlink Example 1

Assistant information exchange for facilitating CEL-based or service-based paging scheme selection is described below. For CEL-based paging carrier selection, the UE and network node should keep consistent information about the UE's CELs when the network node sends paging to the UE. However, in existing schemes the network node only has information about the UE's CEL based on its own evaluation during a connected mode which may be not ne the same as the UE's evaluation.

In order to keep consistent information about UE's CEL between the UE and the network when the network node sends paging to UE, one solution is that the UE reports its CELs to the network node.

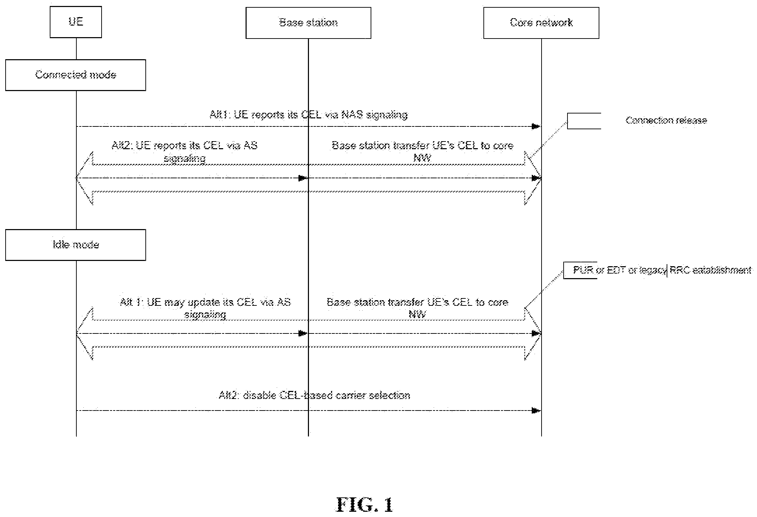

As shown in FIG. 1, the UE may report its CEL at connection release, e.g., via NAS layer signaling or via AS layer signaling. The UE may report its CEL by using one of the following options: in the last NAS PDU, in the last uplink RRC message, in a MAC CE along with uplink RRC message, or in the lower layer successful acknowledgement for the receipt of the RRC Connection Release message.

As shown in FIG. 1, after the UE enters into an idle mode, if UE's CEL changes, the UE may update its CEL to the network. The UE may make use of PUR or trigger EDT, if configured, to send the latest CEL. If none of these resources are configured, the UE could trigger a legacy connection. Specifically, the UE may not need to update its CEL if CEL becomes better and could only update its CEL when its CEL deteriorates. The reason is that if the UE does not update, it may cause paging failure due to insufficient repetitions.

If the UE's CEL changes frequently, the signaling overhead and UE power consumption for updating CEL may be high, another option may be that if UE's CEL changes, the UE can disable all the CEL-based paging carrier selection, e.g., fallback to the legacy paging carrier selection and paging monitoring scheme.

For the stationary UE or the UE with very low mobility, it can report CEL at the stage of connection release and no need to further update.

### Downlink Example 2

For a CEL-based paging carrier selection scheme, different carriers can be configured for different CELs. A UE can choose a carrier among the carriers corresponding to its CEL for paging reception. However, the DL and UL may have different requirements. This needs to be further considered for CEL-based paging carrier selection scheme.

For some delay tolerant services, the paging may not need to be responded to immediately. Then the network node can assign special UL resources, e.g., certain UL carrier(s) for the UE to send the paging response. One solution is that the network indicates a carrier in the paging message and this carrier is for carrying paging response, e.g., the first UL signaling, e.g., UL Msg1 or Msg3.

The network can broadcast some carriers for carrying UL delay tolerant service, e.g., such carriers can be configured with less resources or with lower scheduling priority. When such carriers can be used for carrying a paging response, the explicit indication in the paging message can be a simple index corresponding to one of the broadcast carriers.

For some delay sensitive services, the paging may need to be responded to immediately, e.g., with high priority. In this case, the network node can also assign special UL resources, e.g., certain UL carrier(s) for the UE to send the paging response. Such carriers can be configured with more resources or with higher scheduling priority, e.g., contention-free random-access resources.

In order for base station to differentiate between whether the network can accept a delayed paging response or expects an immediate paging response for one or some UEs, an indication can be introduced into the signaling in the interface between base station and core network, e.g., the S1 interface or Ng interface signaling.

### Downlink Example 3

Described below is a UE-based fallback from CEL-based carrier selection to legacy carrier selection. However, in some scenarios, UE-based fallback may be less efficient that some other of the disclosed techniques. For example, if the number of UEs in a certain CEL is very large, the corresponding carriers may be easily overloaded, then CEL-based carrier selection may need to be disabled for some of the UEs. In this case, disabling CEL-based carrier selection for each UE would cause large signaling overhead.

One solution is to introduce a network-based fallback/disable scheme, e.g., an explicit indication is introduced into a system information message as a fallback/disable indication; or change of configuration can be used as an implicit indication. After the UE receives this indication or the changed configuration, the UE stops monitoring the paging or performs random access on some carriers.

To avoid all related UEs from falling back at the same time, a threshold in SIB signaling or dedicated signaling can be used as the fallback indication to fallback/disable CEL-based carrier selection or service-based carrier selection for some of the UEs. A UE can generate a value based on a random number, if this value generated exceeds the configured threshold, the UE can follow the indication to fallback to legacy carrier selection. If this value generated by UE does not exceed the configured threshold, the UE can skip the indication, or vice versa. For example, the network can provide via SIB or a dedicated signaling a threshold value of 0.6, e.g, with meaning of 60%. For a certain UE, it can generate a random number between [0, 1]. If this random number is larger than or equal to 0.6, the UE needs to disable CEL-based carrier selection or service-based carrier selection. If this random number is less than 0.6, the UE can skip the indication and continue to use CEL-based carrier selection or service-based carrier selection. It should be noted that such a scheme can only be used for disabling the CEL-based or service-based UL carrier selection, but not CEL-based or service-based DL carrier selection. As UE and network need to keep consistent understanding about whether the CEL-based or service-based DL carrier selection is used, the UE cannot randomly disable this feature.

### Uplink Example 1

For a CEL-based carrier selection scheme, different carriers can be configured for different CELs. For a UE in a bad coverage situation, the UE can use certain carriers for random access. Such carriers can be configured with more resources in order to increase random access success for the UEs in a bad coverage area. Also, it is helpful to avoid the bad impact of the UEs in a bad coverage area on other UEs.

However, in the current specification, only one DL carrier can be configured for UE to receive RAR, if many UEs are in the corresponding CEL and would use these UL carriers, it's still possible to occur block on the DL.

One solution is to configure multiple DL carriers for UEs in different CELs to receive RAR in the PRACH parameters configuration for a UL carrier. After the UEs in a certain CEL choose one of the corresponding UL carriers for transmitting random access preamble, these UEs can further choose one DL carrier from the configured multiple DL carriers for receiving RAR.

Even all the UE choose a certain CEL to send random access preamble, it's allowed that the UEs with different DL channel radio quality can choose one DL carrier corresponding to its DL CEL, e.g., a different CEL from its UL CEL for receiving RAR.

Moreover, another variant for this scheme is that for any UL carrier, several DL carriers can be configured and the UEs can choose a DL RAR carrier with one of the deterministic ways including: the UE selects a DL RAR carrier based on kind of UE's device identity, e.g., UE_ID or S-TMSI or some new UE identity; and UE selects a DL RAR carrier whose index can be acquired by adding a deterministic offset onto the selected UL carrier.

### Uplink Example 2

If different carriers are configured for different CELs, it may be the case that for a certain carrier, only part of CELs are configured. For example, there may exist a certain carrier, e.g., carrier A, that is only configured with CEL_1 and CEL_3. For a UE initially in CEL_1, it may choose carrier_A. However, if the UE fails to access the network after it completes all the attempts in CEL_1, it may be impossible for the UE to ramp to the next CEL, e.g., CEL_2 as there has no CEL_2 resources in this carrier_A.

One alternative is to allow the UE to continue access attempt for a few more times in the current CEL. Another alternative is to allow the UE to tune to another carrier, e.g., carrier_B that has configuration for the next CEL, e.g, CEL_2, to continue access attempts. The first alternative may be slightly preferred as it can prevent the UE initially in CEL_1 from unexpected occupying resources of the UEs initially in CEL_2.

### Service-Based Carrier Selection Embodiment

In order to support service-based carrier selection, the UE and network node may need to have the same understanding about the UE's services.

A typical service characteristic is stationary/mobility. In NB-IoT, there are many discussions about WUS monitor for mobility UE. Whether a UE is a mobility UE can be decided on whether the current cell in which the base station send paging message is the UE's last serving cell.

There is another kind of service-related information in NB-IoT, e.g., paging probability. The UE may negotiate this information with the core network and monitor the WUS group configured for the corresponding paging probability range. This paging probability information also needs to be included in paging message over the interface between base station and core network node and to be used by the base station to decide WUS group.

In NB-IoT, since enhanced coverage features would consume more system resources, it is allowed that an operator can restrict the use of coverage enhancements. Based on this, the UE can know that it's an enhanced coverage restricted UE, e.g., based on subscription information. The enhanced coverage restricted indication can also be included in paging message over the interface between base station and core network node. This information is intended to be used by the base station to avoid useless DL channel repetitions for paging, e.g. the base station shall page the enhanced coverage restricted UE with normal coverage. Accordingly, for this kind of UE, less PDCCH repetitions need to be received.

The above kinds of service-related information can be acquired by the AS layer of the UE and therefore can be used for service-based carrier process enhancements.

In one sub-embodiment, some certain carriers (carrier_group_A) in a cell can be configured for mobility UE and/or stationary UE. For example, if a UE moves to a new_cell from old_cell, the UE can only use the carrier in carrier_group_A configured for mobility UE in the new_cell to perform random access or monitor paging. For network side, as the new_cell is not the last serving cell for the UE, the new_cell would also choose the carrier in carrier_group_A to paging this UE. With this scheme, the random access or paging of the mobility UE would have no impacts on those UEs that statically reside in the new_cell.

In another sub-embodiment, some certain carriers (carrier_group_B) in a cell can be configured for enhanced coverage restricted UE. For example, the carrier in this carrier_group_B can be configured with less resources for UL/DL repetitions. If a UE is an enhanced coverage restricted UE, the UE can only choose the carrier in carrier_group_B to perform random access or monitor paging. With this scheme, under the same assumption for the amount of resources, more carriers for random access or paging can be configured enhanced coverage restricted UE. On the other hand, random access or paging of the enhanced coverage restricted UE would have no impacts on the other UEs in the cell. For network side, as the cell B is not the last serving cell for the UE, the cell B would also use the certain carriers to paging this UE. With this scheme, the random access or paging of a mobility UE would have no impacts on those UEs that statically reside in the cell.

In another sub-embodiment, some certain carriers in a cell can be configured for different paging probability ranges. For example, the carriers (carrier_group_C) can be configured for lower paging probability range (e.g., from paging probability 0.1 to paging probability 0.3) and the carrier in this carrier_group_C can be configured with less PO resources (e.g., large defaultPagingCycle or smaller nB). And the carriers (carrier_group_D) can be configured for higher paging probability range (e.g., from paging probability 0.7 to paging probability 0.9). If the paging probability of a UE is in lower paging probability range, e.g., 0.2, the UE can only choose the carrier in carrier_group_C to monitor paging. If the paging probability of a UE is in higher paging probability range, e.g., 0.7, the UE can only choose the carrier in carrier_group_D to monitor paging. With this scheme, the carrier in carrier_group_C can fulfill the paging delay requirements with less resources for the UE whose paging probability is in lower paging probability range, and the carrier in carrier_group_D can fulfill the paging delay requirements with enough resources for the UE whose paging probability is in higher paging probability range.

In another sub-embodiment, some certain carriers (carrier_group_E) in a cell can be configured for different Access Categories which are also a kind of service characteristic.

In another sub-embodiment, some certain carriers (carrier_group_F) in a cell can be configured for different Access Classes which are also a kind of service characteristic.

In a variant for the above first sub-embodiment, certain PRACH resources can be configured for mobility UE and/or for stationary UE. In a variant for the above second sub-embodiment, certain PRACH resources can be configured for enhanced coverage restricted UE. In a variant for the above third sub-embodiment, different PRACH resources can be configured for different paging probability ranges. In a variant for the above fourth sub-embodiment, different PRACH resources can be configured for different Access Categories. In a variant for the above fifth sub-embodiment, different PRACH resources can be configured for different Access Classes.

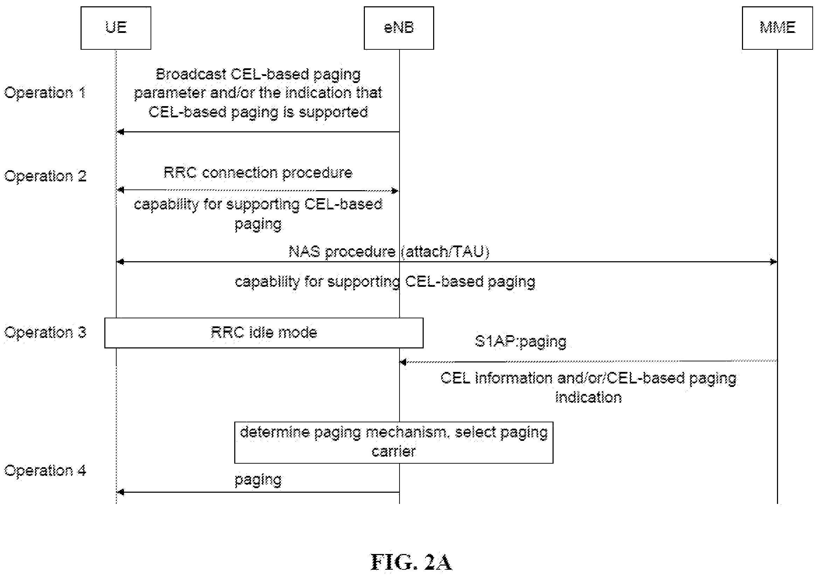

FIG. 2A shows an example of a coverage level based paging scheme based on some example embodiments of the disclosed technology.

In some implementations, the coverage level-based paging scheme may include the following operations:
Operation 1. If a network node (e.g., eNB) supports the coverage level-based paging scheme, it may broadcast parameters associated with the coverage level based paging scheme and/or an indication that the cell supports the coverage level based paging scheme.
Operation 2. A user device (e.g., UE) that supports the coverage level-based paging scheme may report capability information via a radio resource control (RRC) establishment procedure or a non-access stratum (NAS) procedure. In both the RRC establishment procedure and the NAS procedure, a mobility management entity (MME) obtains the capability information.
Operation 3. When the UE is released from an RRC idle mode, and when paging is triggered from a core network, the MME may include information associated with the coverage level based paging scheme and/or the indication that a cell or UE supports the coverage level based paging scheme in S1 application protocol (S1-AP) paging message transmitted to eNB if the MME knows the UE supports the coverage level based paging scheme.
Operation 4. If the network node (e.g., eNB) finds the indication that the user device (e.g., UE) supports the coverage level based paging scheme in the S1-AP paging message, and if the network node (e.g., eNB) also supports the coverage level based paging scheme, the network node (e.g., eNB) chooses a paging carrier based on a paging carrier selection mechanism for the coverage level based paging scheme and then sends a paging message on the paging carrier.

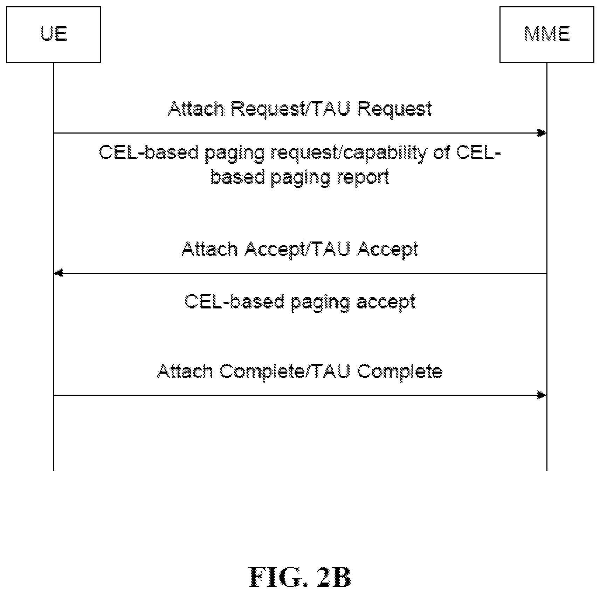

FIG. 2B shows an example of enabling a coverage level-based paging scheme using attach request/tracking area update (TAU) request messages based on some example embodiments of the disclosed technology.

In some implementations, a user device (e.g., UE) may trigger a coverage level based paging operation by sending a coverage level based paging request and/or a report indicating capability for the coverage level based paging scheme via an NAS procedure (Attach/TAU).

The user device (e.g., UE) triggers coverage level-based paging request/capability of coverage level based paging report in Attach Request/TAU Request message based on its mobility characteristics. In some implementations, a stationary user device (e.g., UE) or a low-mobility user device may initiate a coverage level based paging operation. If the MME agrees with the request, it may send the acknowledgment along with Attach Accept/TAU Accept message.

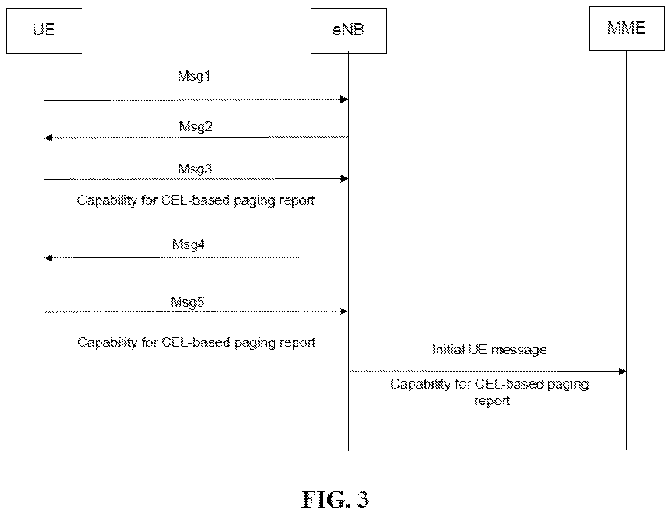

FIG. 3 shows an example of enabling a coverage level based paging mechanism using a radio resource control (RRC) establishment procedure based on some example embodiments of the disclosed technology.

In some implementations, a user device (e.g., UE) provides a report indicating capability for the coverage level based paging scheme via the procedure of RRC establishment.

The user device (e.g., UE) transmits the capability information through Msg3/Msg5 and the network node (e.g., eNB) may transmit the capability information to the MME through an initial UE message.

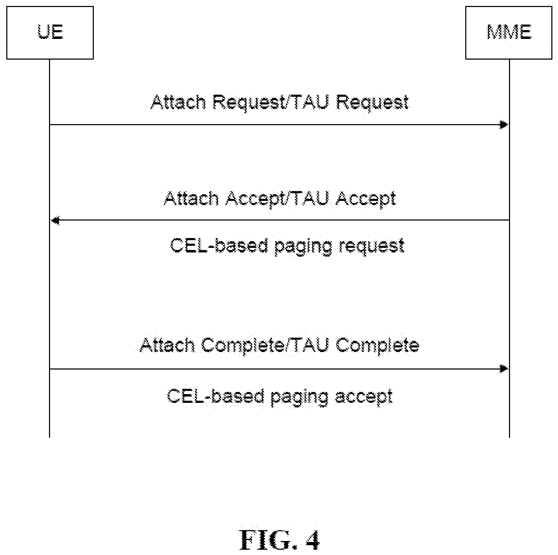

FIG. 4 shows an example of enabling coverage level based paging mechanism using a non-access stratum (NAS) procedure based on some example embodiments of the disclosed technology.

A mobility management entity (MME) triggers a request for the coverage level based paging operation via an NAS procedure (Attach/TAU).

The MME triggers the coverage level based paging request based on the mobility characteristics of the user device (e.g., UE) in Attach Accept/TAU Accept message. For a stationary UE or a low-mobility UE, the MME may initiate the coverage level based paging operation. If the UE accepts the request, the UE may transmit the acknowledgment information through Attach Complete/TAU Complete message.

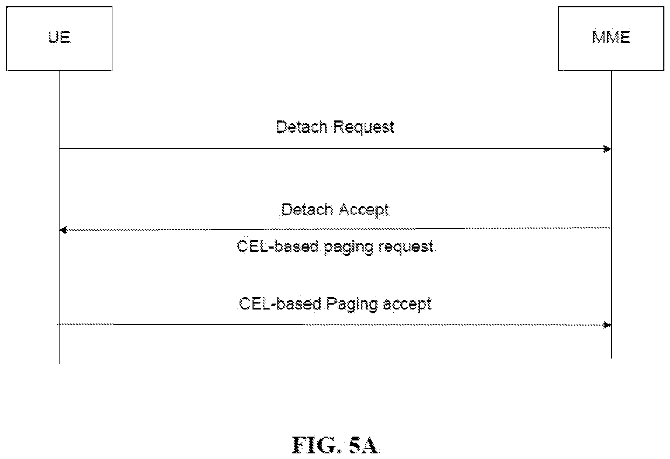

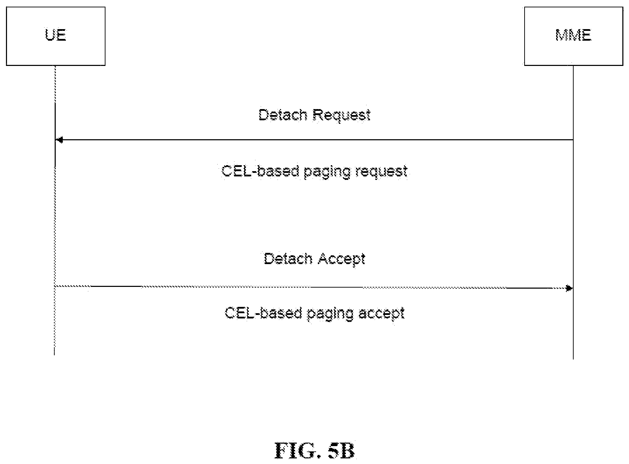

FIGS. 5A and 5B show examples of a coverage level based paging mechanism including detach request/detach accept messages based on some example embodiments of the disclosed technology.

The MME triggers a request for the coverage level based paging via an NAS procedure (Detach).

In a detach procedure triggered by a user device (e.g., UE), the MME triggers Coverage level based paging request in Detach Accept message based on the mobility characteristics of the user device (e.g., UE). For a stationary UE or a low-mobility UE, the MME may trigger the coverage level based paging operation. The UE sends the acknowledgment information to the MME.

In a detach procedure triggered by the MME, the MME triggers the coverage level based paging request in Detach Request message based on the mobility characteristics of the UE. For a stationary UE or a low-mobility UE, the MME may trigger the coverage level based paging operation. The UE sends an acknowledgment via the Detach Accept message to the MME.

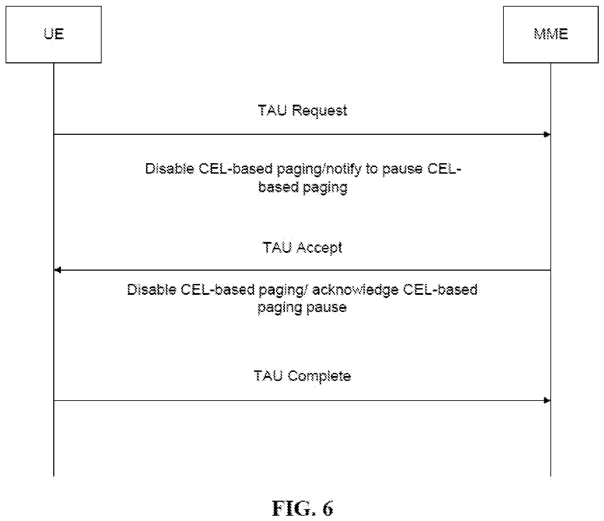

FIG. 6 shows an example of disabling a coverage level based paging scheme based on some example embodiments of the disclosed technology.

A user device (e.g., UE) triggers a disablement of the coverage level based paging scheme and/or sends a notification for pausing the coverage level based paging operation via a TAU procedure.

The user device (e.g., UE) provides information for disabling the coverage level based paging scheme and/or transmits a notification for pausing the coverage level based paging operation via a TAU request message and the MME transmits an acknowledgment via a TAU accept message.

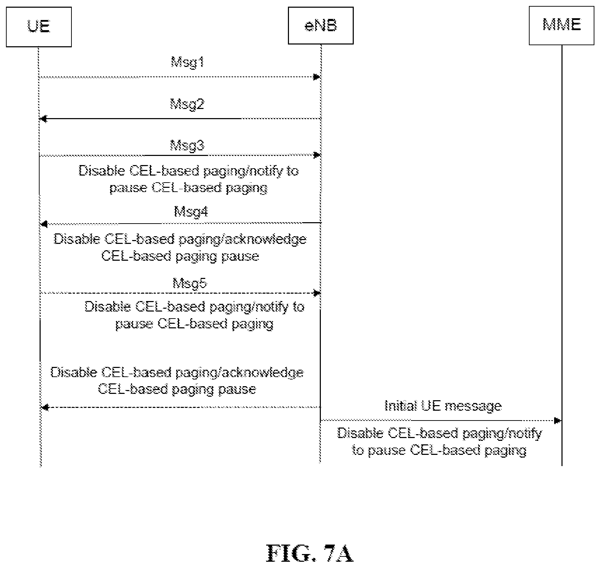

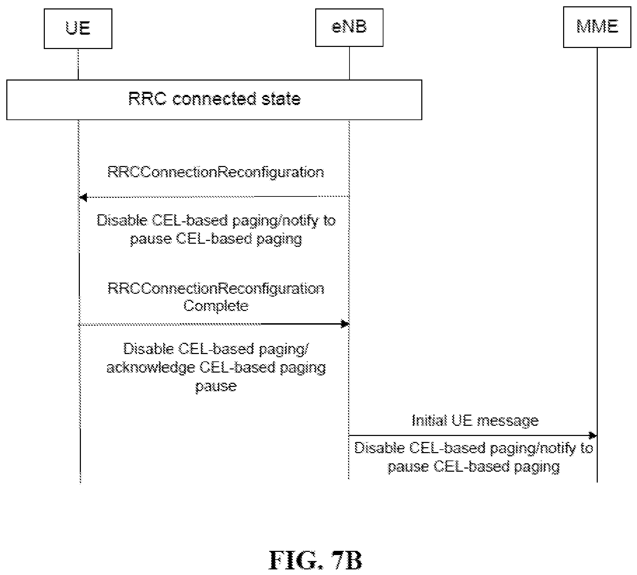

FIGS. 7A and 7B show examples of disabling a coverage level based paging mechanism including an RRC establishment procedure based on some example embodiments of the disclosed technology.

A user device (e.g., UE) triggers a disablement of the coverage level based paging scheme and/or sends a notification for pausing the coverage level based paging operation via an RRC establishment procedure.

In an implementation, the UE provides information for disabling the coverage level based paging scheme and/or sends a notification for pausing the coverage level based paging operation via Msg3, Msg5 in the RRC establishment procedure.

A network node (e.g., eNB) acknowledges the reception of the information and/or notification via a subsequent RRC message (e.g., RRCConnectionReestablishment/ RRCConnectionReconfiguration) or a message associated with a downlink data transmission or a new individual signaling. Subsequently, the eNB forwards the information associated with the disablement of the coverage level based paging scheme and/or the notification for pausing the coverage level based paging operation via an initial UE message.

In another implementation, in an RRC connected mode, the UE provides the information associated with the disablement of the coverage level based paging scheme and/or the notification for pausing the coverage level based paging operation via an RRC message (e.g., RRCConnectionReconfigurationComplete/RRCConnectionReestablishmentComplete/UECapabi lityInformation message) or a message associated with an uplink data transmission. The eNB acknowledges the reception of the information and/or notification via a dedicated message or a message associated with a downlink data transmission. Subsequently, the eNB forwards the information associated with the disablement of the coverage level based paging scheme and/or the notification for pausing the coverage level based paging operation via an initial UE message.

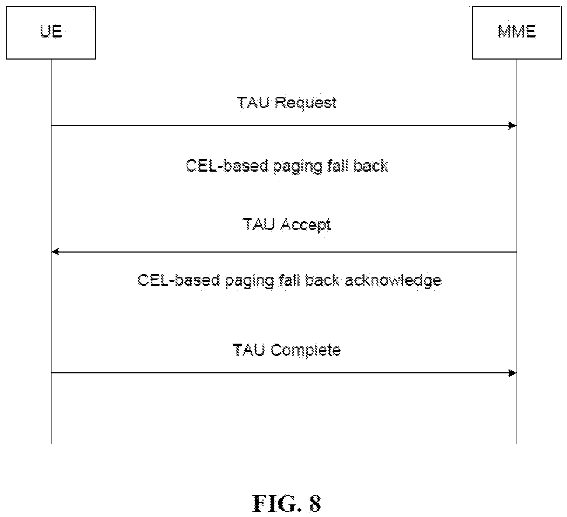

FIG. 8 shows an example of falling back to a legacy paging mechanism from a coverage level based paging mechanism based on some example embodiments of the disclosed technology.

A user device (e.g., UE) provides an indication to fall back to a legacy paging scheme via Attach Request/TAU Request message in an NAS procedure (Attach/TAU).

The UE may notify the MME that the UE will transition back to a legacy paging scheme via an Attach Request/TAU Request message, and the MME may acknowledge the reception of the notification via an Attach Accept/TAU Accept message.

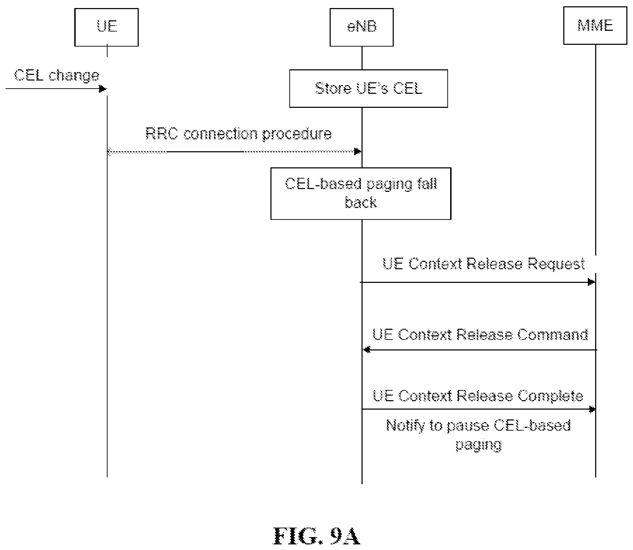

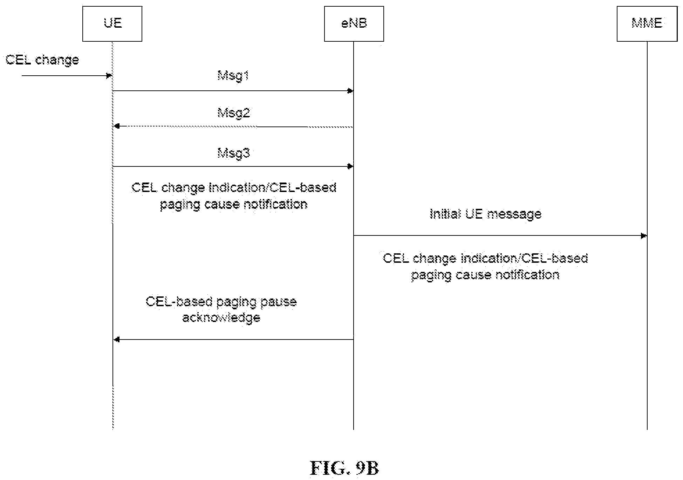

FIGS.9A and 9B show examples of falling back to a legacy paging mechanism from a coverage level based paging mechanism using an RRC establishment procedure based on some example embodiments of the disclosed technology.

In some implementations, the process of falling back to a legacy paging scheme can be performed via an AS procedure.

In one example, the eNB perceives a change in the coverage level of the UE and triggers the falling back procedure to transition to a legacy paging scheme in an RRC establishment procedure. In the case where the eNB stores the information associated with the coverage level, when the coverage level changes, the UE initiates an RRC establishment, and the eNB perceives the change in the coverage level by receiving Msg1 message and triggers the falling back procedure to transition to a legacy paging scheme. Subsequently, in a release procedure, the eNB provides the notification associated with the falling back procedure to transition to a legacy paging scheme in UE Context Release Request message or in UE Context Release complete message, and the MME acknowledges the reception of the notification via UE Context Release Command message or a new signaling.

In another example, the UE provides an indication associated with the falling back procedure to transition to a legacy paging scheme via Msg3 in EDT procedure. When the coverage level changes, the UE triggers an early data transmission (EDT) procedure and provides the indication associated with the falling back procedure to transition to a legacy paging scheme via Msg3 message, and the eNB acknowledges the completion of the falling back procedure. Subsequently, in a release procedure, the eNB provides the notification associated with the falling back procedure to transition to a legacy paging scheme via an initial UE message.

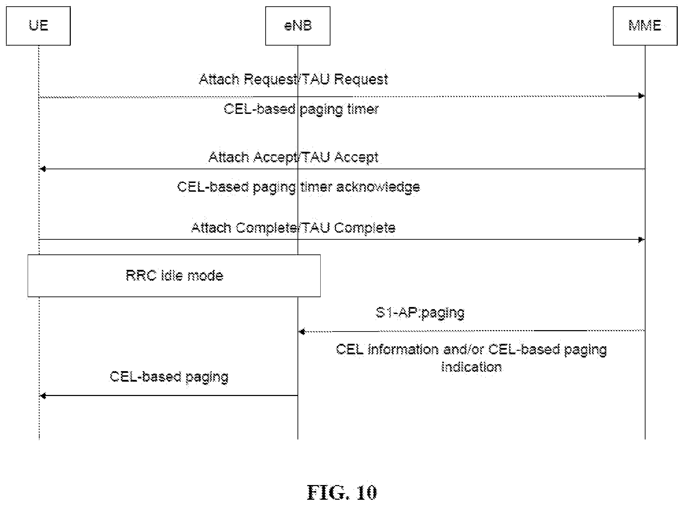

FIG. 10 shows an example of negotiating a timer of a coverage level based paging scheme with a mobility management entity (MME) based on some example embodiments of the disclosed technology.

In some implementations, a user device (e.g., UE) negotiates a timer of the coverage level based paging scheme with the MME via an NAS procedure (Attach/TAU).

In some implementations, in the case where the coverage level based paging scheme is enabled between the UE and the MME, the UE and the MME negotiate the length of the timer and manage the timer. The UE provides the capability for the coverage level based paging scheme in Attach Request/TAU Request message as well as the length of the timer. The MME acknowledges the length of the timer via Attach Accept%TAU Accept message. If the timer expires, the coverage level based paging scheme may be transitioned back to the legacy paging scheme.

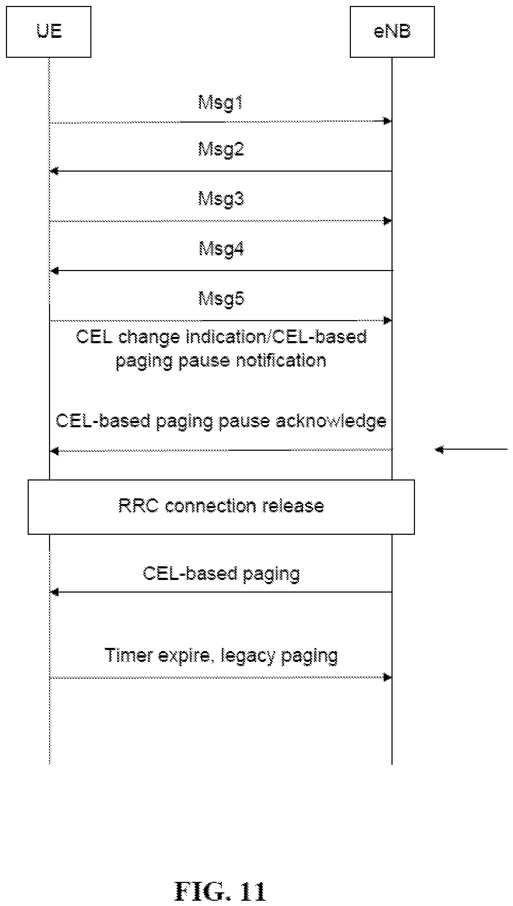

FIG. 11 shows an example of negotiating a timer of a coverage level based paging scheme with eNB based on some example embodiments of the disclosed technology.

In some implementations, the UE negotiates the timer of coverage level based paging with eNB via an RRC establishment procedure. In the case where the coverage level based paging scheme is enabled between the UE and eNB, the UE and the eNB negotiate the length of the timer and manage the timer. The UE provides the capability for the coverage level based paging via messages in an RRC establishment procedure (e.g., Msg3/Msg5/RRCConnectionReestablishmentReques/ RRCConnectionReconfigurationComplete) as well as the length of the timer. The eNB acknowledges the length of the timer via an RRC message (RRCConnectionReestablishment/ RRCConnectionReconfiguration/RRCConnectionRelease). If the timer expires, the paging scheme is transitioned from the coverage level based paging scheme back to a legacy paging scheme.

In some implementations, a method for configuring paging related parameters may include configuring paging related parameter (e.g., DRX, npdcch-NumRepetitionPaging) for each paging carrier. In some implementations, a method for configuring paging related parameters may include configuring paging related parameter (e.g., DRX, npdcch-NumRepetitionPaging) for each CEL.

In configuring the paging related parameters (e.g., DRX, npdcch-NumRepetitionPaging) for each paging carrier, the eNB broadcasts the paging related parameters (e.g., DRX, npdcch-NumRepetitionPaging) for each paging carrier in SIB. The UE determines the paging related parameters to be used based on a formula associated with the paging carrier and receives paging messages based on the paging related parameters. The mapping relationship between paging carriers and paging related parameters is shown in Table 1 below.

**Table 1**

| Carrier_index | DRX | npdcch-NumRepetitionPaging |
|---|---|---|
| 1 | rfx | rx |
| 2 | rfy | ry |

In configuring paging related parameters (e.g., DRX, npdcch-NumRepetitionPaging) per CEL) for each CEK in the case where paging carriers are configured based on CEL, the UE determines the paging related parameters to be used based on the selected paging carrier and its CEL The mapping relationship between coverage level values, paging carriers and paging related parameters is shown in Table 2 below. Here, "rfx" denotes x radio frame, "rx" denotes that the number of repetitions for paging is x.

**Table 2**

| CEL | Carrier_index | DRX | npdcch-NumRepetitionPaging |
|---|---|---|---|
| 1 | Cartier_x1, Carrier_y1, ... | rfx | rx |
| 2 | Carrier_x2, Carrier_y2, ... | rfy | ry |

In some embodiments of the disclosed technology, a method for enabling a coverage level based paging scheme may include the following operations:
The UE triggers a request procedure for a coverage level based paging scheme and/or a report procedure as to the capability for the coverage level based paging scheme via an NAS procedure (Attach/TAU).

The UE provides a capability report for the coverage level based paging scheme via an RRC establishment procedure.

The MME triggers a request procedure of the coverage level based paging scheme via an NAS procedure (Attach/TAU).

The MME triggers a request procedure of the coverage level based paging scheme via an NAS procedure (Detach).

In some implementations, the UE triggers a request procedure for a coverage level based paging scheme and/or a report procedure as to the capability for the coverage level based paging scheme via an NAS procedure (Attach/TAU). The UE may trigger a request procedure for a coverage level based paging scheme and/or a report procedure as to the capability for the coverage level based paging scheme via Attach Request/TAU Request message based on its mobility characteristics. For a stationary UE or a low-mobility UE, the UE can trigger the coverage level based paging operation.

In some implementations, the UE performs the report procedure as to the capability for the coverage level based paging scheme via an RRC establishment procedure. The UE provides capability information for paging schemes including coverage level based paging scheme and legacy paging scheme through Msg3/Msg5, and the eNB may forward the capability information to the MME via an initial UE message.

In some implementations, the MME triggers the request procedure of the coverage level based paging scheme via an NAS procedure (Attach/TAU). The MME triggers such a request procedure based on the mobility characteristics of the UE via Attach Accept/TAU Accept message. For a stationary UE or a low-mobility UE, the MME can trigger the coverage level based paging operation.

In some implementations, the MME triggers the request procedure of the coverage level based paging scheme via an NAS procedure (Detach). The MME triggers such a request procedure via Attach Accept/TAU Accept message based on the mobility characteristics of the UE. For a stationary UE or a low-mobility UE, the MME can trigger the coverage level based paging operation.

In some embodiments of the disclosed technology, a method for disabling coverage level based paging/notifying pausing coverage level based paging may include the following operations:
In some implementations, the UE triggers a disablement procedure of the coverage level based paging scheme and/or sends a notification for pausing the coverage level based paging operation via a TAU procedure,
In some implementations, the UE triggers the disablement procedure of the coverage level based paging scheme and/or sends the notification for pausing the coverage level based paging operation in an RRC establishment procedure.

In some implementations, the UE triggers the disablement procedure of the coverage level based paging scheme and/or sends the notification for pausing the coverage level based paging operation via a TAU procedure, and the UE provides the information associated with the disablement of the coverage level based paging operation and the notification for pausing the coverage level based paging operation via the TAU request message and the MME acknowledges the reception of the information via a TAU Accept message.

In some implementations, the UE triggers the disablement procedure of the coverage level based paging scheme and/or sends the notification for pausing the coverage level based paging operation via an RRC establishment procedure. The UE provides the information associated with the disablement of the coverage level based paging operation and the notification for pausing the coverage level based paging operation via Msg3, Msg5 or a corresponding uplink (UL) data transmission. The eNB acknowledges the disablement procedure of the coverage level based paging scheme via an RRC message (RRCConnectionReestablishment/ RRCConnectionReconfiguration) or a corresponding downlink (DL) data transmission.

In some embodiments of the disclosed technology, a method for falling back to a legacy paging scheme may include the following operations.

In some implementations, the UE provides an indication that the UE will transition from the coverage level based paging scheme back to the legacy paging scheme via Attach Request/TAU Request message in an NAS procedure (Attach/TAU),

In some implementations, the eNB perceives a change in coverage level and triggers the falling back procedure to the legacy paging scheme via an RRC establishment procedure,
In some implementations, the UE provides an indication regarding the falling back procedure toward the legacy paging scheme via Msg3 message in an EDT procedure.

In some implementations, the UE provides the indication regarding the falling back procedure toward the legacy paging scheme via Attach Request/TAU Request message in an NAS procedure (Attach/TAU), and the MME acknowledges the reception of the indication via Attach Accept/TAU Accept message.

In some implementations, when the eNB perceives the change in coverage level and triggers the falling back procedure toward the legacy paging scheme in RRC establishment procedure. In the case where the eNB stores the information related to the CEL, when the coverage level changes, the UE needs to initiate an RRC establishment, and the eNB may perceive the change in the coverage level by receiving Msg1 message and trigger the falling back procedure toward the legacy paging scheme.

In some implementations, the UE provides the indication regarding the falling back procedure toward the legacy paging scheme via Msg3 message in an EDT procedure. When the coverage level changes, the UE initiates the EDT procedure and provides the indication regarding the falling back procedure toward the legacy paging scheme via Msg3 message, and the eNB sends an acknowledgment message to the UE.

In some embodiments of the disclosed technology, a method for setting a timer of the coverage level based paging scheme may include the following operations.

In some implementations, the UE negotiates the timer of the coverage level based paging scheme with the MME via an NAS procedure (Attach/TAU).

In some implementations, the UE negotiates the timer of the coverage level based paging scheme with the eNB via an RRC establishment procedure.

In some implementations, the UE negotiates the timer of the coverage level based paging scheme with the MME via an NAS procedure (Attach/TAU). In the case where the coverage level based paging scheme is enabled between the UE and the MME, the UE and the MME negotiate the length of the timer and manage the timer. The UE provides the capability information for the coverage level based paging scheme via Attach Request/TAU Request message as well as the length of the timer. The MME acknowledges the length of the timer via Attach Accept/TAU Accept message. If the timer expires, the paging scheme may be transitioned from the coverage level based paging back to the legacy paging scheme.

In some implementations, the UE negotiates the timer of the coverage level based paging scheme with the eNB via an RRC establishment procedure. In the case where the coverage level based paging scheme is enabled between the UE and the eNB, the UE and the eNB negotiate the length of the timer and manage the timer. The UE provides the capability information for the coverage level based paging scheme in Msg3/Msg5/RRCConnectionReestablishmentReques/ RRCConnectionReconfigurationComplete as well as the length of the timer. The eNB acknowledges the length of the timer via RRC message (RRCConnectionReestablishment/ RRCConnectionReconfiguration). If the timer expires, the paging scheme may be transitioned from the coverage level based paging back to the legacy paging scheme.

In some embodiments of the disclosed technology, a method for paging related parameter configuration may include the following operations.

In some implementations, the method includes configuring paging related parameters (e.g., DRX, npdcch-NumRepetitionPaging) for each paging carrier. In some implementations, the method includes configuring paging related parameters (e.g., DRX, npdcch-NumRepetitionPaging) for each coverage level value.

In some implementations, in configuring the paging related parameters (e.g., DRX, npdcch-NumRepetitionPaging) for each paging carrier, the eNB broadcasts the paging related parameters (e.g., DRX, npdcch-NumRepetitionPaging) for each paging carrier in SIB. The UE determines the paging related parameters to be used based on a formula associated with the paging carrier and receives paging messages based on the paging related parameters.

In some implementations, in configuring the paging related parameters (e.g., DRX, npdcch-NumRepetitionPaging) for each coverage level value, in the case where paging carriers are configured based on the CEL, the paging related parameters (e.g., DRX, npdcch-NumRepetitionPaging) are configured for each coverage level value. The UE determines the paging related parameters to be used based on the selected paging carrier and its CEL.

In some embodiments of the disclosed technology, a method for selecting a paging carrier in the coverage level based paging scheme may include the following operations.

In some implementations, a paging carrier is selected in a legacy paging carrier range.

In some implementations, a paging carrier is selected in the range of the paging carrier associated with the coverage level of the UE.

In some implementations, in selecting the paging carrier in the legacy paging carrier range, the UE and the eNB use the legacy formula for paging carrier selection in the legacy paging carrier range, after selecting paging carriers, if the coverage level configured for the selected paging carrier is inconsistent with the UE's coverage level value, the UE and the eNB will use the legacy paging scheme.

In some implementations, in selecting the paging carrier in the range of the paging carrier associated with the coverage level of the UE, if the coverage level of the UE is configured with more than one paging carrier, the UE and the eNB use the legacy formula for paging carrier selection in the range the range of the paging carrier associated with the coverage level of the UE. After selecting the paging carrier, the eNB sends paging messages on the selected paging carrier and the UE receives paging messages on the selected paging carrier.

In some embodiments of the disclosed technology, a method for selecting a paging carrier in the coverage level based paging scheme includes the following operations. In some implementations, a paging carrier is selected in the legacy paging carrier range. In some implementations, a paging carrier is selected in the range of the paging carrier associated with the coverage level of the UE.

In some implementations, in selecting a paging carrier in the legacy paging carrier range, the UE and the eNB use the legacy formula for paging carrier selection in the legacy paging carrier range. After selecting a paging carrier, if the coverage level configured for the selected paging carrier is inconsistent with the UE's coverage level, the UE and the eNB use the legacy paging scheme. If the coverage level configured for the selected paging carrier is consistent with the UE's coverage level, the UE and the eNB use the paging carrier to receive and transmit paging messages.

In some implementations, in selecting a paging carrier in the range of the paging carrier associated with the coverage level of the UE, if the coverage level of the UE is configured with more than one paging carrier, the UE and the eNB use the legacy formula for paging carrier selection in the range of the paging carrier associated with the coverage level of the UE. After selecting a paging carrier, the eNB sends a paging message on the selected paging carrier and the UE receives the paging message on the selected paging carrier.

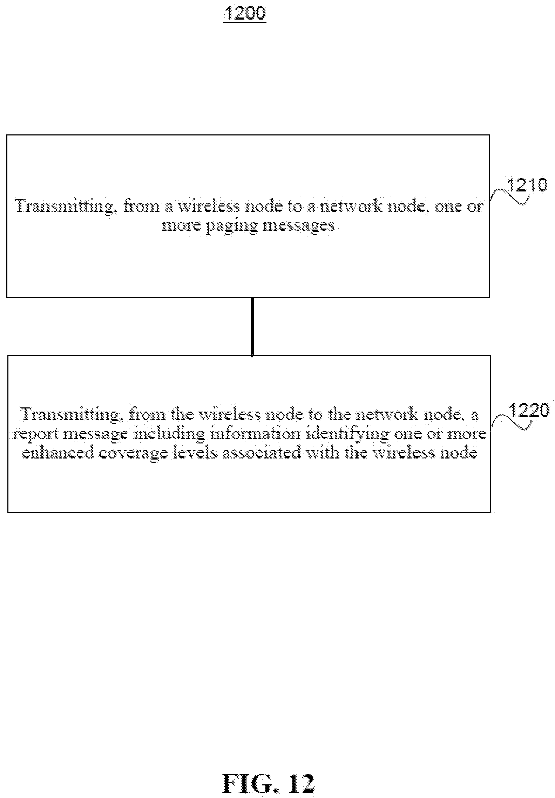

FIG. 12 shows an example of a process for wireless communication. In some embodiments of the disclosed technology, a method of wireless communication 1200 includes, at 1210, transmitting, from the wireless node to the network node, a report including information identifying one or more enhanced coverage levels or number of physical random-access channel (PRACH) repetitions associated with the wireless node.

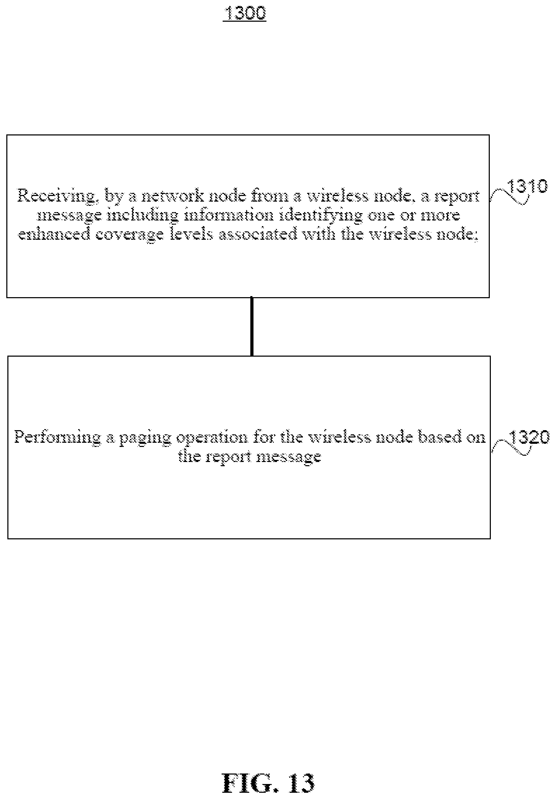

FIG. 13 shows another example of a process for wireless communication. In some embodiments of the disclosed technology, a method of wireless communication 1300 includes, at 1310, receiving, by a network node from a wireless node, a report including information identifying one or more enhanced coverage levels or number of PRACH repetitions associated with the wireless node; and at 1320, performing a paging operation for the wireless node based on the report message.

FIG. 14 shows a method of wireless communication 1400 that includes, at 1410, transmitting, from a network node to a wireless node, a paging message that includes one or more transmission resources on which a paging response to the paging message is to be sent, wherein the one or more transmission resources for a delay tolerant service are configured with fewer resources or lower scheduling priority than that for a delay sensitive service, and wherein the one or more transmission resources for the delay sensitive service are configured with more resources or higher scheduling priority than that for the delay tolerant service.

The method further includes receiving, by the network node from the wireless node, the paging response on the one or more transmission resources.

In the context of this patent document, the word "first paging scheme" may be used to indicate a coverage level based paging scheme. In some implementations, the word "first communication node" can be used to indicate eNB or gNB, the word "second communication node" can be used to indicate user equipment (UE), and the word "third communication node" can be used to indicate a mobility management entity (MME) or a mobility management function (AMF).

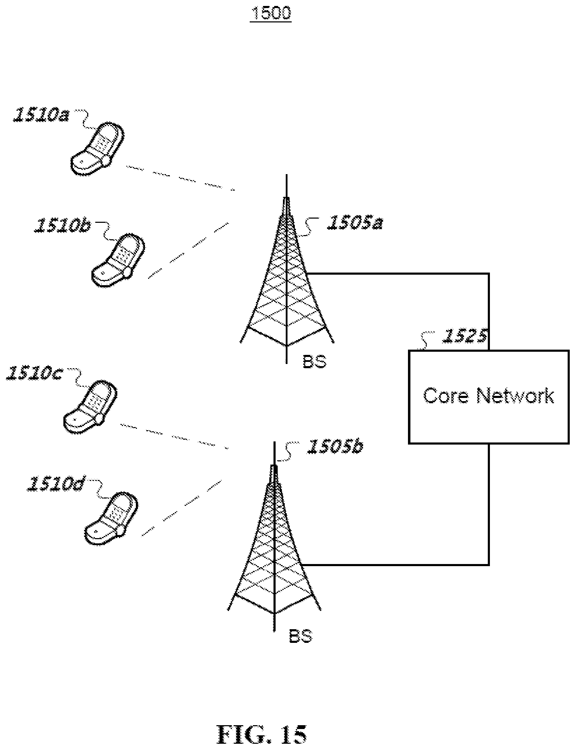

FIG. 15 shows an example of a wireless communication system 1500 where techniques in accordance with one or more embodiments of the present technology can be applied. A wireless communication system 1500 can include one or more base stations (BSs) 1505a, 1505b, one or more wireless devices 1510a, 1510b, 1510c, 1510d, and a core network 1525. A base station 1505a, 1505b can provide wireless service to wireless devices 1510a, 1510b, 1510c and 1510d in one or more wireless sectors. In some implementations, a base station 1505a, 1505b includes directional antennas to produce two or more directional beams to provide wireless coverage in different sectors.

The core network 1525 can communicate with one or more base stations 1505a, 1505b. The core network 1525 provides connectivity with other wireless communication systems and wired communication systems. The core network may include one or more service subscription databases to store information related to the subscribed wireless devices 1510a, 1510b, 1510c, and 1510d. A first base station 1505a can provide wireless service based on a first radio access technology, whereas a second base station 1505b can provide wireless service based on a second radio access technology. The base stations 1505a and 1505b may be co-located or may be separately installed in the field according to the deployment scenario. The wireless devices 1510a, 1510b, 1510c, and 1510d can support multiple different radio access technologies. The techniques and embodiments described in the present document may be implemented by the base stations of wireless devices described in the present document.

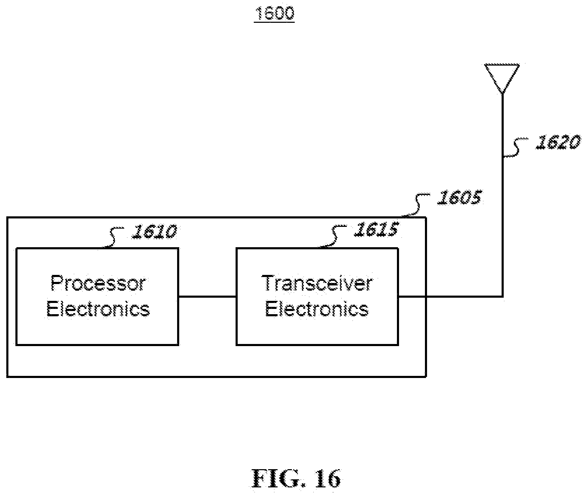

FIG. 16 is a block diagram representation of a portion of a radio station in accordance with one or more embodiments of the present technology can be applied. A radio 1605 such as a base station or a wireless device (or UE) can include processor electronics 1610 such as a microprocessor that implements one or more of the wireless techniques presented in this document. The radio 1605 can include transceiver electronics 1615 to send and/or receive wireless signals over one or more communication interfaces such as antenna 1620. The radio 1605 can include other communication interfaces for transmitting and receiving data. Radio 1605 can include one or more memories (not explicitly shown) configured to store information such as data and/or instructions. In some implementations, the processor electronics 1610 can include at least a portion of the transceiver electronics 1615. In some embodiments, at least some of the disclosed techniques, modules or functions are implemented using the radio 1605. In some embodiments, the radio 1605 may be configured to perform the methods described in this document.

### Summary

Aspect 1: UE explicitly reports its enhanced coverage levels (CELs) to the network node.

Aspect 2: network explicitly indicates a carrier in the paging message and this carrier is for carrying paging response, e.g., the first UL signaling, e.g., UL Msg1 or Msg3.

Aspect 3: To introduce a network-based fallback/disable scheme to fallback or disable CEL-based carrier selection or service-based carrier selection, e.g., an explicit indication is introduced into system information message as fallback/disable indication; or change of configuration can be used as implicit indication. Or a threshold in SIB signaling or dedicated signaling can be used as the fallback indication to fallback/disable CEL-based carrier selection or service-based carrier selection for some of the UEs.

Aspect 4: To configure multiple DL carriers for UEs in different CELs to receive RAR in the PRACH parameters configuration for a UL carrier.

Aspect 5: To allow the UE to continue access attempt for a few more times in the current CEL. Another solution (alternative_2) is to allow the UE to tune to another carrier, e.g., carrier_B that has configuration for the next CEL, e.g, CEL_2, to continue access attempts.

Aspect 6: Some certain carriers (carrier_group_A) or PRACH resources in a cell can be configured for mobility UE; Some certain carriers (carrier_group_B) or PRACH resources in a cell can be configured for enhanced coverage restricted UE; Some certain carriers in a cell can be configured for different paging probability ranges. For example, the carriers (carrier_group_C) or PRACH resources can be configured for lower paging probability range and the carrier in this carrier_group_C can be configured with less PO resources (e.g., large defaultPagingCycle or smaller nB). The carriers (carrier_group_D) or PRACH resources can be configured for higher paging probability range and the carrier in this carrier_group_D can be configured with more PO resources (e.g., large defaultPagingCycle or smaller nB); Some certain carriers (carrier_group_E) or PRACH resources in a cell can be configured for different Access Categories; Some certain carriers (carrier_group_F) or PRACH resources in a cell can be configured for different Access Classes.

In the technical solutions described herein the wireless device may be a UE such as a mobile phone or a tablet or any other device capable of wireless communication and the network device may be a network-side equipment such as a base station. FIG. 16 shows an example hardware platform for implementing the wireless node or the network node.

It will be appreciated that the present document discloses techniques that can be embodied in various embodiments to establish and manage multicast sessions in various scenarios. The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used in the claims, a wireless terminal may be user equipment, mobile station, or any other wireless terminal including fixed nodes such as base stations. A network node includes a base station including a next generation Node B (gNB), enhanced Node B (eNB), or any other device that performs as a base station. A resource range may refer to a range of time-frequency resources or blocks.

## Claims

1. A method (1400) of wireless communication, comprising:
transmitting (1410), from a network node to a wireless node, a paging message that includes one or more transmission resources on which a paging response to the paging message is to be sent,
wherein the one or more transmission resources for a delay tolerant service are configured with fewer resources or lower scheduling priority than that for a delay sensitive service, and
wherein the one or more transmission resources for the delay sensitive service are configured with more resources or higher scheduling priority than that for the delay tolerant service; and
receiving, by the network node from the wireless node, the paging response on the one or more transmission resources.

2. The method of claim 1, wherein the one or more transmission resources correspond to a carrier on which the paging response is to be sent.

3. The method of claim 1 or 2, wherein the one or more transmission resources comprise contention-free random-access resources.

4. A method of wireless communication, comprising:
receiving, by a wireless node from a network node, a paging message that includes one or more transmission resources on which a paging response to the paging message is to be sent,
wherein the one or more transmission resources for a delay tolerant service are configured with fewer resources or lower scheduling priority than that for a delay sensitive service, and
wherein the one or more transmission resources for the delay sensitive service are configured with more resources or higher scheduling priority than that for the delay tolerant service; and
transmitting, by the wireless node to the network node, the paging response using the one or more transmission resources.

5. The method of claim 4, wherein the one or more transmission resources correspond to a carrier on which the paging response is to be sent.

6. The method of any of claims 4 or 5, wherein the one or more transmission resources comprise contention-free random-access resources.

7. An apparatus for communication network, comprising: a processor configured to implement a method recited in any of claims 1 to 6.

8. A computer-readable storage medium having code stored thereupon, the code, upon execution by a processor, causing the processor to implement a method recited in any of claims 1 to 6.

## Patentansprüche

1. Verfahren (1400) zur drahtlosen Kommunikation, aufweisend:
Übertragen (1410), von einem Netzwerkknoten an einen drahtlosen Knoten, einer Paging-Nachricht, die eine oder mehrere Übertragungsressourcen aufweist, auf denen eine Paging-Antwort auf die Paging-Nachricht gesendet werden soll,
wobei die eine oder die mehreren Übertragungsressourcen für einen verzögerungstoleranten Dienst mit weniger Ressourcen oder einer niedrigeren Planungspriorität als für einen verzögerungsempfindlichen Dienst konfiguriert sind, und
wobei die eine oder die mehreren Übertragungsressourcen für den verzögerungsempfindlichen Dienst mit mehr Ressourcen oder höherer Planungspriorität als die für den verzögerungstoleranten Dienst konfiguriert sind; und
Empfangen durch den Netzwerkknoten von dem drahtlosen Knoten der Paging-Antwort auf der einen oder den mehreren Übertragungsressourcen.

2. Verfahren nach Anspruch 1, wobei die eine oder die mehreren Übertragungsressourcen einem Träger entsprechen, auf dem die Paging-Antwort zu senden ist.

3. Verfahren nach Anspruch 1 oder 2, wobei die eine oder die mehreren Übertragungsressourcen konfliktfreie Direktzugriffs-Ressourcen aufweisen.

4. Verfahren zur drahtlosen Kommunikation, aufweisend:
Empfangen durch einen drahtlosen Knoten von einem Netzwerkknoten einer Paging-Nachricht, die eine oder mehrere Übertragungsressourcen aufweist, auf denen eine Paging-Antwort auf die Paging-Nachricht gesendet werden soll,
wobei die eine oder die mehreren Übertragungsressourcen für einen verzögerungstoleranten Dienst mit weniger Ressourcen oder einer niedrigeren Planungspriorität als für einen verzögerungsempfindlichen Dienst konfiguriert sind, und
wobei die eine oder die mehreren Übertragungsressourcen für den verzögerungsempfindlichen Dienst mit mehr Ressourcen oder höherer Planungspriorität als die für den verzögerungstoleranten Dienst konfiguriert sind; und
Übertragen durch den drahtlosen Knoten an den Netzwerkknoten der Paging-Antwort unter Verwendung der einen oder mehreren Übertragungsressourcen.

5. Verfahren nach Anspruch 4, wobei die eine oder die mehreren Übertragungsressourcen einem Träger entsprechen, auf dem die Paging-Antwort zu senden ist.

6. Verfahren nach einem der Ansprüche 4 oder 5, wobei die eine oder die mehreren Übertragungsressourcen konfliktfreie Direktzugriffs-Ressourcen aufweisen.

7. Vorrichtung für ein Kommunikationsnetzwerk, aufweisend: einen Prozessor, der konfiguriert ist, ein Verfahren nach einem der Ansprüche 1 bis 6 zu implementieren.

8. Computerlesbares Speichermedium mit darauf gespeichertem Code, wobei der Code bei Ausführung durch einen Prozessor den Prozessor veranlasst, ein Verfahren nach einem der Ansprüche 1 bis 6 zu implementieren.

## Revendications

1. Procédé (1400) de communication sans fil, comprenant :
la transmission (1410), d'un nœud de réseau à un nœud sans fil, d'un message de radiomessagerie présentant une ou plusieurs ressources de transmission sur lesquelles une réponse de radiomessagerie au message de radiomessagerie doit être envoyée,
où la ou les ressources de transmission pour un service tolérant aux retards sont configurées avec moins de ressources ou une priorité de planification inférieure à celle pour un service sensible aux retards, et
où la ou les ressources de transmission pour le service sensible aux retards sont configurées avec plus de ressources ou une priorité de planification supérieure à celle pour le service tolérant aux retards ; et
la réception par le nœud de réseau en provenance du nœud sans fil, de la réponse de radiomessagerie sur la ou les ressources de transmission.

2. Procédé selon la revendication 1, où la ou les ressources de transmission correspondent à une porteuse sur laquelle la réponse de radiomessagerie doit être envoyée.

3. Procédé selon la revendication 1 ou la revendication 2, où la ou les ressources de transmission comprennent des ressources d'accès aléatoire exemptes de conflit.

4. Procédé de communication sans fil, comprenant :
la réception, par un nœud sans fil d'un nœud de réseau, d'un message de radiomessagerie présentant une ou plusieurs ressources de transmission sur lesquelles une réponse de radiomessagerie au message de radiomessagerie doit être envoyée,
où la ou les ressources de transmission pour un service tolérant aux retards sont configurées avec moins de ressources ou une priorité de planification inférieure à celle pour un service sensible aux retards, et
où la ou les ressources de transmission pour le service sensible aux retards sont configurées avec plus de ressources ou une priorité de planification supérieure à celle pour le service tolérant aux retards ; et
la transmission, par le nœud sans fil au nœud de réseau, de la réponse de radiomessagerie au moyen de la ou des ressources de transmission.

5. Procédé selon la revendication 4, où la ou les ressources de transmission correspondent à une porteuse sur laquelle la réponse de radiomessagerie doit être envoyée.

6. Procédé selon la revendication 4 ou la revendication 5, où la ou les ressources de transmission comprennent des ressources d'accès aléatoire exemptes de conflit.

7. Appareil pour réseau de communication, comprenant : un processeur configuré pour mettre en œuvre un procédé selon l'une des revendications 1 à 6.

8. Support d'enregistrement lisible par ordinateur où est stocké un code, dont l'exécution par un processeur entraîne la mise en œuvre par ledit processeur d'un procédé selon l'une des revendications 1 à 6.
